# EUROPÄISCHE PATENTSCHRIFT

(11) **EP 3 165 096 B1**
(45) Veröffentlichungstag und Bekanntmachung des Hinweises auf die Patenterteilung: **09.01.2019**
(21) Anmeldenummer: 15193759.6
(22) Anmeldetag: 09.11.2015
(51) Int. Cl.: A23C 1/10, A23L 19/15, A23L 2/385, A23C 1/14, A23C 9/152, A23B 7/02, A23B 7/08

(54) **VERFAHREN ZUR HERSTELLUNG VON FRUCHTPULVER**
PROCESS FOR PRODUCING FRUIT POWDER
PROCÉDÉ DE PRODUCTION DE FRUITS EN POUDRE.

(43) Veröffentlichungstag der Anmeldung: 10.05.2017
(73) Patentinhaber: DMK Deutsches Milchkontor GmbH, 27404 Zeven (DE)
(72) Erfinder: Diekhaus, Martin, 49431 Holdorf (DE)
(74) Vertreter: Fabry, Bernd

(56) Entgegenhaltungen:
- EP-A2- 0 113 898
- JP-A- 2004 121 136
- US-A1- 2012 321 745
- DATABASE WPI Week 200431 2004 Thomson Scientific, London, GB; AN 2004-336509 XP002753453, & JP 2004 121136 A (NIPPON JIFFY SHOKUHIN KK) 22. April 2004 (2004-04-22)
- DE KONING K: "Milchschokolade-Crumb und Blokmilk", ZUCKER- UND SUESSWAREN WIRTSCHAFT, BECKMANN, LEHRTE, DE, Bd. 45, Nr. 10, 1. Januar 1992 (1992-01-01), Seiten 368-370, XP008122406, ISSN: 0373-0204

## Beschreibung

### GEBIET DER ERFINDUNG

Die Erfindung befindet sich auf dem Gebiet der Lebensmitteltechnologie und betrifft ein Verfahren zur Herstellung von Fruchtpulver-Derivaten mit verbesserten sensorischen Eigenschaften.

### STAND DER TECHNIK

Das Trocknen von Lebensmitteln, z.B. Früchten, gehört zu den ältesten und zugleich natürlichsten Konservierungsmethoden und hat sich als schonende Haltbarmachung bis heute bewährt.

Unter Trocknung versteht man allgemein den Entzug von Flüssigkeiten aus dem Trocknungsgut, durch Verdunstung, Verdampfung oder andere technische Anwendungen. Das Trockengut kann in Form von Pulver oder Granulaten, in Stücken oder Scheiben erstellt oder, z.B. bei Früchten, im Ganzen belassen werden. Durch den Feuchtigkeitsentzug weist das Trockengut nach der Behandlung ein wesentlich geringeres Gewicht auf, bei gleichzeitiger Beibehaltung der wichtigen und wertvollen Bestandteile, wie Vitamine und Mineralien.

Fruchtpulver wird in der Lebensmittelindustrie für die Herstellung verschiedenster Produkte verwendet. In einer Vielzahl von Anwendungsmöglichkeiten sorgen die Pulver für charakteristisches Aroma, Farbe und ein natürliches Aussehen der Produkte (Speisen und Getränke). Die Pulver besitzen den jeweils charakteristischen Geschmack, Geruch und Farbe der Fruchtsäfte. Diese Eigenschaften zeigen sich besonders beim Rückverdünnen mit Wasser. Die Pulver sind schon mit kaltem Wasser gut löslich. Der Einsatzbereich dieser Produkte erstreckt sich von Mischungen für Instantgetränkepulver über den Fruchtsuppenbereich bis hin zu Füllungen für den Bäckereisektor.

Es gibt zwei Arten von Fruchtpulver:
Faseriges Fruchtpulver wird aus püriertem Fruchtfleisch hergestellt. Diese Art Fruchtpulver enthält alle natürlichen Frucht-Fasern und hat eine grobe Struktur (Granulat). Maltodextrin aus Mais bzw. Glucosesirup werden als Trägerstoff während der Trocknung zugegeben um das Trocknen zu ermöglichen. Faseriges Fruchtpulver ist ideal für Milchshakes, Powershakes, Desserts, Kuchen, süße und pikante Saucen.

Fruchtsaft-Pulver ist getrocknetes Fruchtsaftkonzentrat. Es enthält keine Fasern und hat eine feinere Struktur. Maltodextrin oder Zucker wird hinzugefügt, um Verklumpung des Pulvers zu verhindern. Es ist perfekt geeignet für Getränke und Gelees. Ferner kann es als Faseriges Fruchtpulver in allen süßen und herzhaften Zubereitungen, die in der gleichen Weise verwendet werden.

Üblicherweise werden die Fruchtpulver mittels Gefriertrocknung oder Sprühtrocknung und gegebenenfalls anschießender Vermahlung hergestellt. Gefriertrocknung wird jedoch besonders bevorzugt, da sie sich als ein besonders schonendes Trocknungsverfahren in Bezug auf Geschmack, Vitamin-Erhaltung oder Rehydrationsfähigkeit beweisen hat. Da der Trocknungsprozess bei niedrigen Temperaturen durchgeführt wird, bleiben Aromastoffe, Farbe, Vitamine und Struktur optimal erhalten. Den Früchten wird bei der Gefriertrocknung praktisch der gesamte Wassergehalt entzogen. Dieser macht je nach Frucht im Schnitt etwa 90 % des Gewichtes aus.

Das Problem bei der Herstellung von Fruchtpulver und Fruchtsaftpulver ist, dass gefriergetrocknete Früchte Feuchtigkeit sehr schnell wieder aufnehmen. Diese Zunahme der Hygroskopizität verursacht nicht nur Schwierigkeiten in der Manipulation der Produkte sondern auch eine Reduzierung der Aromastabilität.

Dieses Problem kann zum Teil gelöst werden, indem Fruchtpulver mit Trägerstoffen verwendet werden. Fruchtpulver mit Trägerstoffen sind gefriergetrocknete Pulver aus Früchten und Zuckerarten mit einem Fruchtanteil von etwa 40 %. Diese Fruchtpulver besitzen die typischen Geschmacks-, Aroma- und Farbeigenschaften der eingesetzten Früchte. Der Einsatz von Maltodextrin bzw. Glucosesirup als Trägerstoff führt zu einer Reduzierung der Hygroskopizität und einer Erhöhung der Aromastabilität durch den Umhüllungseffekt.

Verschiedene Alternativen sind aus dem Stand der Technik bekannt.

Das Dokument EP 0 113 898 A2 betrifft ein instantisiertes, enzymatisch hydratisiertes Molke-Pulver. Dabei wird zuerst Süßmolke enzymatisch hydrolisiert und auf einen Feststoffgehalt von 65% konzentriert. Anschließend wurde das erhaltene Molkekonzentrat auf einem Vakuum-Band-Trockner getrocknet. In Beispiel 2 wird die Herstellung eines Produktes beschrieben, bei dem man Molkekonzentrat und gesüßtes Orangensaftkonzentrat zu gleichen Teilen mischt und auf einem Vakuumbandtrockner trocknet.

Das Dokument US 2012/0321745 A1 stellt ein angesäuertes Milchgetränkepulver bereit, bei dem nach Rekonstitution mit einer Flüssigkeit, die Milchproteine durch die Säure nicht koaguliert werden, die auch in der Pulvermischung vorhanden ist. Die beanspruchten pulverförmigen Zusammensetzungen enthalten Zucker, konzentrierte Fruchtsäfte, entrahmtes oder nichtentrahmtes Milchpulver, Maltodextrin, Na-Carboxymethylcellulose und wahlweise: Säurereduktionsmittel oder Puffermittel, Aromastoffe, Farbstoffe, Calciumverstärkungsmittel, Vitamine, Mineralien Emulgatoren, Präbiotika, Probiotika und Fasern.

Das Dokument JP 2004 121136 A offenbart getrocknete Früchte, die mit einer gesüßten Gewürzmischung behandelt und dann zermahlen werden. In Beispiel 3 wird süße Kondensmilch mit getrockneten Erdbeeren vermischt. Das Gemisch wird unter Vakuum getrocknet.

Die Veröffentlichung mit dem Titel "Milchschokolade-Crumb und "Blokmilk"" (Zucker- und Süßwaren Wirtschaft, 1992, 45(10), 368-370**)** offenbart die Herstellung eines gezuckerten Milchkonzentrats unter Zugabe von Kakaopulver, welches dann z.B. auch auf einem Vakuumbandtrockner entwässert werden kann.

Aus US 4,664,920 ist ein Pulver mit hohem Fruchtanteil bekannt, das eine Trägermatrix auf Basis von Magnesiumsalzen und bestimmten Säuren enthält. Dieses Pulver wird mittels Gefriertrocknung, Sprühtrocknung oder Trommeltrocknung hergestellt. In Beispiel 1 wird ein Pulver mittels Sprühtrocknung hergestellt, das aus 85 Gew.-% Saft-Feststoffen und 15 Gew.-% Magnesium-Citrat-Träger besteht. In Beispiel 3 wird ein Pulver mittels Sprühtrocknung hergestellt, dass 70 Gew.-% Tomaten-Feststoffe und 30 Gew.-% Magnesium-Citrat-Träger aufweist.

Nachteilig an diesem Verfahren ist, dass die mittels Sprühtrocknung hergestellten Pulver aufgrund des Herstellungsverfahrens sphärische Partikel darstellen, die einen Hohlkörper aufweisen. Somit weist nicht das gesamte Volumen der Pulver-Partikel Aromen auf.

Zudem führen Sprühtrocknungsverfahren zu einer breiten Partikelgrößenverteilung, so dass die hergestellten Pulver nachgesiebt werden müssen und dadurch neben dem zeitlichen Arbeitsaufwand auch wertvolles Material verloren geht.

Mittels Wirbelschichtverfahren können Granulate hergestellt werden, die eine enge Partikelgrößenverteilung und eine einstellbare Partikelgröße aufweisen, sodass die Größe so eingestellt werden kann, dass eine Entmischung mit dem zu mischenden Produkt vermindert wird. Allerdings können mit den Wirbelschichtverfahren, wie sie bisher bekannt sind, in der Regel lediglich Beladungen mit Fruchttrockensubstanz (Anteil an Fruchttrockensubstanz am Gesamtgewicht des Granulats) unter 50 Gew.-%, insbesondere zwischen 10 bis 40 Gew.-% erreicht werden. Bei einer Beladung mit Fruchttrockenmasse von mehr als 50 Gew.-% zusammen mit den üblichen Trägermaterialien Gummi Arabicum und/oder Maltodextrin kommt es regelmäßig zum Zusammenbrechen und/oder Verklumpen des Inhaltes des Wirbelschichtbettes. Ein solches Verhalten nimmt mit steigendem Anteil an Fruchttrockensubstanz zu.

Darüber hinaus, auch wenn das Vorhandensein eines Trägerstoffes oder einer Matrix zu einer Reduzierung der Hygroskopizität führt, werden die Natürlichkeit und die geschmackliche Eigenschaften solcher Fruchtpulver beeinträchtigt. Dies führt letztendlich dazu, dass der Geschmack, Geruch und die Farbe der Endprodukte - die solche Fruchtpulver enthalten - als unnatürlich und nicht vollkommen befriedigend von den Konsumenten bewertet werden.

Wie bereits erwähnt, ist die Gefriertrocknung ein besonders bevorzugtes Trocknungsverfahren, da sie sich als ein besonders schonend Trocknungsverfahren in Bezug auf Geschmack, Vitamin-Erhaltung oder Rehydrationsfähigkeit bewiesen hat. Bei diesem Verfahren müssen die Fruchtkonzentrate jedoch erst eingefroren werden, um daraus das Wasser zu sublimieren. Nachteil dieses Verfahren ist die Tatsache, dass es sehr energieaufwendig ist.

Aufgrund des wachsenden Interesses eines großen Teils der Bevölkerung an "gesunder Ernährung" und gesunder Lebensweise allgemein, gibt es ein zunehmendes Interesse an die Herstellung von qualitativ hochwertigen und bekömmlichen Nahrungsmitteln mit natürlichen Zutaten ohne Zusatzstoffe. Es besteht daher im Markt ein starkes und zunehmendes Bedürfnis nach Fruchtpulver-Präparaten, die keine Konservierungsmittel enthalten und die typischen Geschmacks-, Aroma- und Farbeigenschaften der eingesetzten Früchte besitzen. Darüber hinaus, besteht im Gebiet der Lebensmitteltechnologie ein starkes Bedürfnis nach energieschonenden Verfahren, die die Herstellung von hochwertigen Fruchtpulver-Präparaten ermöglichen.

Die Aufgabe der vorliegenden Erfindung hat somit darin bestanden, Fruchtpulver-Präparate zur Verfügung zu stellen, die frei von den eingangs geschilderten Nachteilen sind. Insbesondere sollten die Fruchtpulver-Präparate gleichzeitig eine geringe Hygroskopizität, eine Verbesserung der Aromastabilität aufweisen.

Eine zweite Aufgabe der vorliegenden Erfindung hat somit darin bestanden, Fruchtpulver-Präparate zur Verfügung zu stellen, die so eine vorteilhafte Partikelverteilung aufweisen, dass sie leicht wasserlöslich und geschmacklich einwandfrei sind. Die Fruchtpulver-Präparate sollten auch ohne aufwendige Siebverfahren erhalten werden.

Eine dritte Aufgabe der vorliegenden Erfindung hat somit darin bestanden, Fruchtpulver-Präparate zur Verfügung zu stellen, die eine Beladung mit Fruchttrockenmasse von mehr als 50 Gew.-% aufweisen.

Eine vierte Aufgabe der vorliegenden Erfindung hat somit darin bestanden, Fruchtpulver-Präparate zur Verfügung zu stellen, die keine Konservierungsmittel enthalten, und die typischen Geschmacks-, Aroma- und Farbeigenschaften der eingesetzten Früchte besitzen.

Eine fünfte Aufgabe der vorliegenden Erfindung hat somit darin bestanden, ein energieschonendes Verfahren zur Verfügung zu stellen, die die Herstellung von hochwertigen Fruchtpulver-Präparaten ermöglichen.

### BESCHREIBUNG DER ERFINDUNG

Gegenstand der vorliegenden Erfindung ist ein Verfahren zur Herstellung von Fruchtpulver-Derivaten mit verbesserten sensorischen Eigenschaften, bei dem man
(a) eine Mischung aus einer Vollmilch und Saccharose herstellt,
(b) die Mischung einer ersten Temperaturbehandlung unterwirft und dabei gleichzeitig sterilisiert und aufkonzentriert,
(c) optional das so gewonnene Konzentrat einer zweiten Temperaturbehandlung unterwirft, bei der es zur Karamellisierung kommt,
(d) das so gewonnene milchige oder karamellisierte Produkt einer ersten Kühlung unterwirft,
(e) das so gewonnene erste gekühlte Produkt mit Laktosekristallen impft, wobei die Einsatzmenge der kristallinen Lactose im Bereich von 150 g bis 250 g pro 1000 Kg Konzentrat liegt,
(f) das so gewonnene geimpfte Produkt einer zweiten Kühlung unterwirft,
(g) das in Schritt (f) erhaltene Produkt mit einem Fruchtkonzentrat mischt,
(g) das so gewonnene zweite gekühlte Produkt einer Trocknung auf einem Vakuumbandtrockner mit anschließender Zerkleinerung unterwirft, wobei das Zwischenprodukt mit Hilfe einer Förderpumpe und einer oszillierenden Düse als Schaum auf die Förderbänder des Vakuumbandtrockners aufträgt, und schließlich
(h) das trockene Pulver ausschleust,
wobei das Gewichtverhältnis von Vollmilch und Saccharose (Vollmilch + Saccharose) zu Fruchtkonzentrat 20:80 bis 80:20 beträgt.

Überraschenderweise wurde gefunden, dass die erfindungsgemäß hergestellten Fruchtpulver-Präparate, eine geringe Hygroskopizität und eine verbesserte Aromastabilität aufweisen als die Fruchtpulver, die mittels Gefriertrocknung oder Sprühtrocknung und gegebenenfalls anschießenden Vermahlung hergestellt werden.

Ferner wurde überraschenderweise gefunden, dass die erfindungsgemäß hergestellten Fruchtpulver-Präparate eine Beladung mit Fruchttrockenmasse von mehr als 50 Gew.-% beladen werden können, ohne ein Zusammenbrechen und/oder Verklumpen beobachtet wird.

Außerdem wurde überraschenderweise gefunden, dass die Kombination der einzelnen Prozessschritte, insbesondere die besondere Kühlung gefolgt von der Vakuumbandtrocknung und die Zugabe des Furchtkonzentrats bevor das Produkt getrocknet wird, zu Fruchtpulver-Präparaten führen, die ohne weitere Maßnahmen eine sehr vorteilhafte Partikelgrößenverteilung aufweisen. Die Pulver sind insbesondere leicht löslich und sensorisch einwandfrei.

Im Sinne der vorliegenden Erfindung umfasst der Begriff "Fruchtkonzentrat" sowohl püriertes Fruchtfleisch als auch Fruchtsaftkonzentrat.

Unter "Frucht" im Sinne der vorliegenden Erfindung sind essbare Produkte von Pflanzen, insbesondere von Bäumen und Sträuchern zu verstehen. Insbesondere sind unter dem Begriff "Frucht" essbare Produkte von Obst- und/oder Gemüsesorten zu verstehen.

Bevorzugte Obstsorten für das Fruchtkonzentrat werden ausgewählt aus der Gruppe bestehend aus: Kirsche, Banane, Grapefruit, Kiwi, Apfel, Birne, Limette, Ananas, Pflaume, Sternfrucht, rote Johannisbeere, schwarze Johannisbeere, Brombeere, Aprikose, Mango, Granatapfel, Aronia, Melone, Drachenfrucht, Cranberry, Erdbeere, Orange, Zitrone, Himbeere, Pfirsich und Mandarine. Besonders bevorzugt sind Fruchtkonzentrate ausgewählt aus der Gruppe bestehend aus Erdbeere, Orange, Zitrone, Himbeere und Pfirsich.

Bevorzugte Gemüsesorten für die Fruchtsäfte und/oder Fruchtsaftkonzentrate werden ausgewählt aus der Gruppe bestehend aus: Lauchgemüse, bevorzugt Zwiebel und/oder Lauch; Kohlgemüse, bevorzugt Wirsingkohl, Rotkohl, Kohlrübe und/oder Blumenkohl; Spargel, Tomate, Karotte und Paprika. Weiter bevorzugt sind insbesondere Tomate und Karotte.

Es hat sich herausgestellt, dass Kombination von Vollmilch, Saccharose, und Konzentrate aus Erdbeere, Orange, Zitrone, Himbeere, Pfirsich, Tomate und Karotte besonders vorteilhaft für die geschmackliche Eigenschaften der erfindungsgemäß hergestellten Fruchtpulver-Präparate sind.

In einer bevorzugten Ausführungsform beträgt das Gewichtsverhältnis Vollmilch und Saccharose 20:80 bis 80:20, vorzugsweise 30:70 bis 70:30, insbesondere bevorzugt von 40:60 bis 60:40, und insbesondere von 50:50.

Wie oben ausgeführt beträgt das Gewichtsverhältnis (Vollmilch + Saccharose) und Fruchtkonzentrat 20:80 bis 80:20, vorzugsweise 30:70 bis 70:30, insbesondere bevorzugt von 40:60 bis 60:40.

In einer weiteren bevorzugten Ausführungsform beträgt das Gewichtsverhältnis Vollmilch und Saccharose 20:80 bis 80:20, vorzugsweise 30:70 bis 70:30, insbesondere bevorzugt von 40:60 bis 60:40, und insbesondere von 50:50 und das Gewichtsverhältnis (Vollmilch + Saccharose) und Fruchtkonzentrat 20:80 bis 80:20, vorzugsweise 30:70 bis 70:30, insbesondere bevorzugt von 40:60 bis 60:40.

Es hat sich herausgestellt, dass die erfindungsgemäß hergestellten Fruchtpulver-Präparate, die Vollmilch + Saccharose in einem Gewichtverhältnis von 40:60 bis 60:40 und die (Vollmilch + Saccharose) und Fruchtkonzentrat in einem Gewichtsverhältnis von 30:70 bis 70:30 enthalten, besonders vorteilhafte Geschmacks-, Aroma- und Farbeigenschaften aufweisen.

Im ersten Abschnitt des Verfahrens erfolgt zunächst die Vermischung einer Vollmilch und Saccharose. Dies findet üblicherweise in einem Mischtank statt. Derartige Bauteile sind aus dem Stand der Technik hinreichend bekannt.

Dabei werden Vollmilch und Saccharose in einer Rührvorrichtung vorzugsweise im Gewichtsverhältnis von 40:60 bis 80:20 und insbesondere 50:50 gemischt, so dass eine Zubereitung entsteht, die eine Trockenmasse von 25 bis 40 Gew.-% und insbesondere von 30 bis 35 Gew.-% aufweist.

Das erhaltene Produkt wird einer ersten Temperaturbehandlung unterworfen, die dazu dient, das Produkt zu sterilisieren. Üblicherweise werden dazu in einem Vorerhitzer Temperaturen von 100 bis 150 °C und insbesondere von 110 bis 140 °C angelegt.

Das sterilisierte Produkt wird in einen Eindampfer, vorzugsweise einen Fallstromverdampfer eingespeist, in dem es unter Anlegen eines Temperaturgradienten von 100 bis auf 50 °C und insbesondere 95 bis auf 55 °C schonend entwässert wird, so dass das so gewonnene Konzentrat mit einer Trockenmasse von 65 bis 90 Gew.-% und vorzugsweise 70 bis 80 Gew.-% anfällt.

Das so erhaltene Konzentrat kann gegebenenfalls in einen Nacherhitzer überführt werden, indem es karamellisiert wird. Dazu wird es im Ofen bei Temperaturen von 85 bis 95 °C über einen Zeitraum von 15 bis 30 Minuten belassen.

Danach wird das milchige oder karamellisierte erhaltene Produkt - falls die oben genannte Karamellisierung erfolgte oder nicht - einer Kühlung unterworfen. Dieser Prozessschritt ist kritisch, denn es kommt darauf an, dass hier Partikel erzeugt werden, die eine enge Größenverteilung aufweisen und im Mittel (D90) einen Durchmesser von weniger als 15 µm aufweisen. Derartige Vorstufen sind dafür mit entscheidend, dass die konfektionsfähigen Endprodukte die gewünschte Löslichkeit und Sensorik besitzen. Um dies zu gewährleisten wird das Produkt zunächst in einem ersten Schritt auf 30 bis 40 °C abgekühlt. Die Lösung ist an dieser Stelle überzuckert, d.h. Saccharose würde beginnen sich abzuscheiden, was zu einer unkontrollierten Agglomeration und Wachstum der Partikel führen würde. Daher wird die Lösung mit Laktosekristallen geimpft, die das Lösungsgleichgewicht wieder verschieben.

Die Einsatzmenge liegt bei 150 bis 250 und vorzugsweise bei 200 g pro 1000 kg Konzentrat, entsprechend 0,2 Gew.-%. Anschließend wird die Lösung im zweiten Schritt auf 20 bis 25 °C abgekühlt und ist nun fertig, um getrocknet zu werden.

Nicht erfindungsgemäß, ist es grundsätzlich auch möglich, die Kühlung in einem Schritt durchzuführen, solange eine hinreichende Menge an Impfkristallen zugegeben wird. Beim Einsatz von Lactose hat sich hingegen der zweistufige Prozess als vorteilhafter im Hinblick auf eine Kristallisationsinhibierung erwiesen.

Es hat sich herausgestellt, dass die Vermischung des Fruchtkonzentrates mit dem Produkt, das nach dem Kühlungsschritt erhalten wurde, vor dem Trocknungsschritt von entscheidender Bedeutung ist, um Furchtpulver-Präparate mit den erwünschten Eigenschaften herstellen zu können. So kann beispielweise das Fruchtkonzentrat nicht gleich mit der Vollmilch und dem Saccharose vermischt werden, da das Fruchtkonzentrat sauer eingestellt ist und der Saccharose invertieren würde, und dadurch würden die sensorischen Eigenschaften der hergestellten Produkte erheblich beeinträchtigt werden.

Das gewonnene Zwischenprodukt wird dann mittels Vakuumbandtrocknung getrocknet.

Vakuumbandtrockner bestehen im Wesentlichen aus einem Gehäuse mit eingebauten, das Produkt befördernden Transportbändern, welche über Heizaggregate gezogen werden. Eine automatische Bandregulierung sorgt für einen präzisen Bandlauf. Die Bänder werden in einer oder mehreren Ebenen parallel gefahren und jedem der Bänder wird eine Dosierpumpe mit oszillierender Düse zugeordnet, die das Produkt erfindungsgemäß als Schaum aufträgt. Die Anmelderin hat gefunden, dass gerade diese Art der Dosierung dazu führt, dass schließlich Produkte erhalten werden, die gegenüber denen beispielsweise aus der Sprühtrocknung hinsichtlich der Partikelgrößenverteilung und damit Löslichkeit und Sensorik deutlich überlegen sind. Hinzu kommt die Siedepunktverschiebung im Vakuum, die dafür sorgt, dass die Verdampfungstemperatur sinkt und das Produkt schonender getrocknet werden kann. Das Prinzip ist dabei bereits seit Mitte der 50er Jahre des vergangenen Jahrhunderts bekannt (vgl. DE 948678 A**,** BAYER).

Die gezuckerten Furchtprodukte durchlaufen während des Trocknens eine hochviskose, vielfach auch klebrige Phase, wodurch sich durch Dampfblasenbildung im Produkt am Ende des Trockenverlaufes auf dem Band ein Trockenkuchen bildet. Während die Bänder zunächst über mehrere voneinander unabhängig einstellbare Heizzonen laufen, stellt die letzte Zone eine Kühlzone dar, in der der Trockenkuchen bis zur Sprödbrüchigkeit abgekühlt, mit einer Guillotine abgebrochen und im Brecher oder Granulator zerkleinert wird.

Der Vakuumbandtrockner kann mit Dampf, Druckwasser oder Thermoöl geheizt werden, das Vakuum wird im Allgemeinen mit einer Kombination aus Dampfstrahlpumpe mit nachgeschaltetem Kondensator und Wasserringvakuumpumpe erzeugt. In den Heizzonen beträgt die Temperatur dabei von 60 bis 130 °C und insbesondere 70 bis 110 °C, wobei der Druck bei 15 bis 40 mbar liegt. Die Heizzonen sind wie schon erwähnt individuell steuerbar, so dass es möglich ist, ein beliebiges Temperaturprofil anzulegen. In der Kühlzone herrschen dann Temperaturen von 20 bis 25 °C. Grundsätzlich gilt, die Trocknung bei möglichst niedrigen Temperaturen durchzuführen, um die Entstehung von nicht löslichen Partikeln zu minimieren.

Eine bauliche Alternative wäre beispielsweise auch ein Vakuumtrockenschrank (nicht erfindungsgemäß).

Das oben beschriebene Verfahren ermöglicht die Herstellung von pulverförmigen Präparaten, die eine hohe Beladung an Frucht aufweisen, nämlich über 50 Gew.-%.

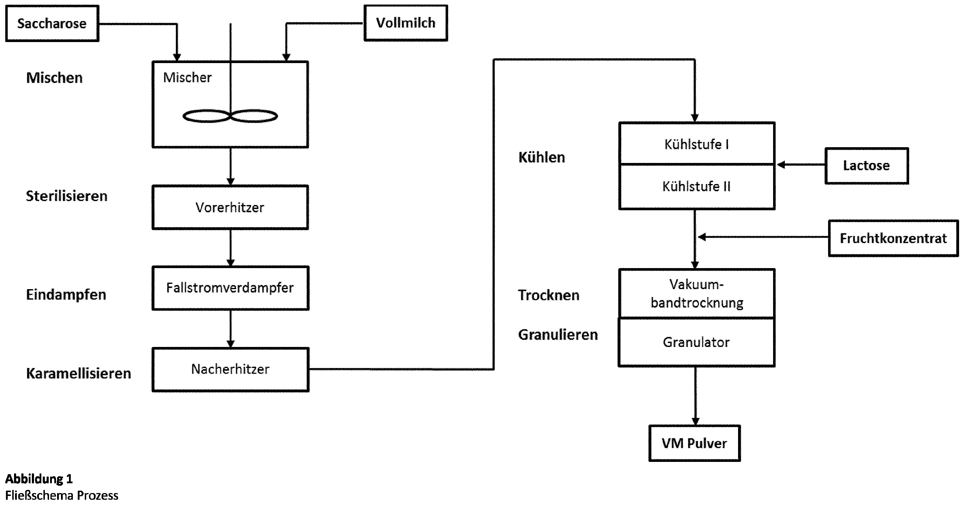

**Abbildung 1** zeigt ein Fließbild des Prozesses.

### GEWERBLICHE ANWENDBARKEIT

Gemäß der vorliegenden Erfindung können Fruchtpulver-Präparate hergestellt werden, die eine geringe Hygroskopizität, eine verbesserte Aromastabilität, leicht wasserlöslich und geschmacklich einwandfrei und eine Beladung mit Fruchttrockenmasse von mehr als 50 Gew.-% aufweisen.

### BEISPIELE

Die vorliegende Erfindung wird unter Bezugnahme auf die nachstehenden Beispiele leichter zu verstehen sein. Jedoch dienen diese Beispiele lediglich zur Veranschaulichung der Erfindung und können nicht als einschränkend in Bezug auf den Schutzbereich der Erfindung ausgelegt werden.

### BEISPIEL 1

In einem Mischtank wurde eine gezuckerte Vollmilch mit einer Trockenmasse von 28 Gew.-% aus 216 g Vollmilch und 45 g Saccharose zubereitet. Die erhaltene Mischung wurde in einem Vorerhitzer bei 145 °C sterilisiert und anschließend in einem Fallstromverdampfer unter Anlegen eines Temperaturgradienten von 95 auf 55 °C bis zu einer Trockenmasse von 75 Gew.-% eingedampft. Das Produkt wurde in einem Nacherhitzer 25 Minuten bei 90 °C karamellisiert und anschließend auf 30 °C abgekühlt. Die Lösung wurde mit 0,2 Gew.-% kristalliner Lactose versetzt, intensiv gerührt und dann auf 20 °C abgekühlt. Unter intensiver Rührung wurden von 100 g Orange-Furchtsaftkonzentrat zugegeben. Die erhaltene gekühlte Masse wurde über eine Förderpumpe und eine oszillierende Düse auf das Förderband eines Vakuumbandtrockners geschäumt. Dieser wies drei Heizzonen (115, 90 und 70 °C) und eine Kühlzone (20 °C) auf (Druck: 20 mbar).

Das erhaltene Produkt wurde zerkleinert und die Löslichkeit in Wasser (g/Liter) und die Zunahme an Wassergehalt nach Lagerung der Fruchtpulver-Präparate in einem offenen Gefäß für 24 Stunden sowie die sensorischen Eigenschaften (sandiger Geschmack: 3 = ausgeprägt, 2 = vorhanden, 1 = nicht festzustellen) von einem Panel bestehend aus drei erfahrenen Testern beurteilt.

### BEISPIEL 2

In einem Mischtank wurde eine gezuckerte Vollmilch mit einer Trockenmasse von 28 Gew.-% aus 216 g Vollmilch und 45 g Saccharose zubereitet. Die erhaltene Mischung wurde in einem Vorerhitzer bei 145 °C sterilisiert und anschließend in einem Fallstromverdampfer unter Anlegen eines Temperaturgradienten von 95 auf 55 °C bis zu einer Trockenmasse von 75 Gew.-% eingedampft. Das Produkt wurde anschließend auf 30 °C abgekühlt. Die Lösung wurde mit 0,2 Gew.-% kristalliner Lactose versetzt, intensiv gerührt und dann auf 20 °C abgekühlt. Unter intensiver Rührung wurden von 200 g Himbeerkonzentrat zugegeben. Die erhaltene gekühlte Masse wurde über eine Förderpumpe und eine oszillierende Düse auf das Förderband eines Vakuumbandtrockners geschäumt. Dieser wies drei Heizzonen (115, 90 und 70 °C) und eine Kühlzone (20 °C) auf (Druck: 20 mbar).

Das erhaltene Produkt wurde zerkleinert und die Löslichkeit in Wasser (g/Liter) und die Zunahme an Wassergehalt nach Lagerung der Fruchtpulver-Präparate in einem offenen Gefäß für 24 Stunden sowie die sensorischen Eigenschaften (sandiger Geschmack: 3 = ausgeprägt, 2 = vorhanden, 1 = nicht festzustellen) von einem Panel bestehend aus drei erfahrenen Testern beurteilt.

### VERGLEICHSBEISPIEL V1

Beispiel 1 wurde wiederholt, das karamellisierte Produkt jedoch in einem Schritt ohne Zugabe von Impfkristallen auf 25 °C abgekühlt.

### VERGLEICHSBEISPIEL V2

Beispiel 1 wurde wiederholt, die Trocknung jedoch in einem Sprühtrockner bei einer Temperatur von 180 °C durchgeführt.

### VERGLEICHSBEISPIEL V4

Bei diesem Vergleichsbeispiel handelt sich um ein kommerziell erhältliches Orange-Fruchtpulver, das mittels Gefriertrocknung hergestellt wurde.

Die Ergebnisse sind in **Tabelle 1** zusammengefasst. Sie zeigen, dass nur die erfindungsgemäßen Fruchtpulver-Präparate hinsichtlich Löslichkeit und Sensorik den Anforderungen entsprechen. Darüber hinaus, sind die erfindungsgemäßen Fruchtpulver-Präparate diejenige, bei der die niedrigste Zunahme an Wassergehalt nach einer Lagerung von 24 Stunden festgestellt werden konnte.

**Tabelle 1**

| Löslichkeit, Sensorik und Zunahme an Wassergehalt nach Lagerung des Fruchtpulver-Präparate in einem offenen Gefäß für 24 Stunden | | | |
|---|---|---|---|
| **Beispiele** | **Löslichkeitsindex (ml)** | **Sensorik (Mittelwert)** | **Zunahme an Wassergehalt (%)** |
| 1 | < 0,1 | 1 | 2 |
| 2 | < 0,1 | 1 | 3 |
| V1 | < 0,2 | 2 | 4 |
| V2 | 2,0 | 3 | 6 |
| V3 | < 0,1 | 3 | 12 |

## Patentansprüche

1. Verfahren zur Herstellung von Fruchtpulver-Derivaten, bei dem man
(a) eine Mischung aus einer Vollmilch und Saccharose herstellt,
(b) die Mischung einer ersten Temperaturbehandlung unterwirft und dabei gleichzeitig sterilisiert und aufkonzentriert,
(c) optional das so gewonnene Konzentrat einer zweiten Temperaturbehandlung unterwirft, bei der es zur Karamellisierung kommt,
(d) das so gewonnene milchige oder karamellisierte Produkt einer ersten Kühlung unterwirft,
(e) das so gewonnene erste gekühlte Produkt mit Laktosekristallen impft, wobei die Einsatzmenge der kristallinen Lactose im Bereich von 150 g bis 250 g pro 1000 Kg Konzentrat liegt,
(f) das so gewonnene geimpfte Produkt einer zweiten Kühlung unterwirft,
(g) das in Schritt (f) erhaltene Produkt mit einem Fruchtkonzentrat mischt,
(h) das so gewonnene Zwischenprodukt einer Trocknung auf einem Vakuumbandtrockner mit anschließender Zerkleinerung unterwirft, wobei das Zwischenprodukt mit Hilfe einer Förderpumpe und einer oszillierenden Düse als Schaum auf die Förderbänder des Vakuumbandtrockners aufträgt, und schließlich
(i) das trockene Pulver ausschleust,
wobei das Gewichtverhältnis von Vollmilch und Saccharose (Vollmilch + Saccharose) zu Fruchtkonzentrat 20:80 bis 80:20 beträgt.

2. Verfahren nach Anspruch 1, **dadurch gekennzeichnet, dass** man im Schritt (a) eine Mischung einsetzt, die Vollmilch und Saccharose im Gewichtsverhältnis von 20:80 bis 80:20 enthält.

3. Verfahren nach mindestens einem der Ansprüche 1 und/oder 2, **dadurch gekennzeichnet, dass** man im Schritt (a) eine Mischung einsetzt, die eine Trockenmasse von 25 bis 40 Gew.-% aufweist.

4. Verfahren nach mindestens einem der Ansprüche 1 bis 3, **dadurch gekennzeichnet, dass** man die erste Temperaturbehandlung im Schritt (b) zweistufig zunächst bei einer Temperatur im Bereich von 100 bis 150 °C und dann unter Anlegen eines Temperaturgradienten von 100 bis 50 °C durchführt.

5. Verfahren nach mindestens einem der Ansprüche 1 bis 4, **dadurch gekennzeichnet, dass** man im Schritt (b) ein Konzentrat mit einer Trockenmasse von 65 bis 90 Gew.-% herstellt.

6. Verfahren nach mindestens einem der Ansprüche 1 bis 5, **dadurch gekennzeichnet, dass** man die Karamellisierung im Schritt (c) bei einer Temperatur im Bereich von 85 bis 95 °C durchführt.

7. Verfahren nach mindestens einem der Ansprüche 1 bis 6, **dadurch gekennzeichnet, dass** man die erste und die zweite Kühlung (Schritte d und f) bei Temperaturen im Bereich von 30 bis 40 °C bzw. 20 bis 25 °C durchführt.

8. Verfahren nach mindestens einem der Ansprüche 1 bis 7, **dadurch gekennzeichnet, dass** man die Vakuumbandtrocknung bei Temperaturen in den Heizzonen im Bereich von 60 bis 130 °C und Drücken von 15 bis 40 mbar durchführt.

## Claims

1. A process for producing of fruit powder derivatives, in which:
(a) a mixture is produced from a whole milk and saccharose,
(b) the mixture is subjected to a first temperature treatment and in the course of this is simultaneously sterilized and concentrated,
(c) optionally the concentrate thus obtained is subjected to a second temperature treatment in which caramelization occurs,
(d) the thus obtained milky or caramelized product is subjected to a first cooling,
(e) the thus obtained first cooled product is seeded with lactose crystals, wherein the amount of crystalline lactose is in the range of 150 g to 250 g per 1000 kg concentrate,
(f) the thus obtained seeded product is subjected to a second cooling,
(g) the product obtained in step (f) is mixed with a fruit concentrate,
(h) the thus obtained intermediate is subjected to a drying on a vacuum-belt dryer with subsequent comminution, wherein the intermediate is applied using a feed pump and an oscillating nozzle as foam to the conveyor belts of the vacuum-belt dryer, and finally
(i) the dry powder is discharged,
wherein the weight ratio of whole milk and saccharose (whole milk + saccharose) to fruit concentrate is 20:80 to 80:20.

2. The process according to claim 1, wherein a mixture is used in step (a) containing whole milk and saccharose in the weight ratio of 20:80 to 80:20.

3. The process according to at least one of claims 1 and/or 2, wherein a mixture is used in step (a) having a dry matter content of 25 to 40% by weight.

4. The process according to at least one of claims 1 to 3, wherein the first temperature treatment in step (b) is carried out in two stages first at a temperature in the range from 100 to 150 °C and then with application of a temperature gradient from 100 to 50 °C.

5. The process according to at least one of claims 1 to 4, wherein a concentrate is produced in step (b) having a dry matter content of 65 to 90% by weight.

6. The process according to at least one of claims 1 to 5, wherein the caramelization in step (c) is carried out at a temperature in the range of 85 to 95 °C.

7. The process according to at least one of claims 1 to 6, wherein the first cooling and second cooling (steps d and f) are carried out at temperatures in the range of 30 to 40 °C and 20 to 25 °C.

8. The process according to at least one of claims 1 to 7, wherein the vacuum-belt drying is carried out at temperatures in the heating zones in the range of 60 to 130 °C and pressures of 15 to 40 mbar.

## Revendications

1. Procédé de fabrication de dérivés de poudres de fruits, selon lequel
(a) un mélange de lait entier et de saccharose est préparé,
(b) le mélange est soumis à un premier traitement thermique, et ainsi simultanément stérilisé et concentré,
(c) le concentré ainsi obtenu est éventuellement soumis à un deuxième traitement thermique, lors duquel une caramélisation se produit,
(d) le produit laiteux ou caramélisé ainsi obtenu est soumis à un premier refroidissement,
(e) le premier produit refroidi ainsi obtenu est inoculé avec des cristaux de lactose, la quantité utilisée de lactose cristallin se situant dans la plage allant de 150 g à 250 g pour 1000 kg de concentré,
(f) le produit inoculé ainsi obtenu est soumis à un deuxième refroidissement,
(g) le produit obtenu à l'étape (f) est mélangé avec un concentré de fruits,
(h) le produit intermédiaire ainsi obtenu est soumis à un séchage sur un séchoir à bande sous vide avec broyage ultérieur, le produit intermédiaire étant déposé sur la bande de transport du séchoir à bande sous vide sous la forme d'une mousse à l'aide d'une pompe de transport et d'une buse oscillante, et enfin
(i) le produit séché est déchargé,
le rapport en poids entre le lait entier et le saccharose (lait entier + saccharose) et le concentré de fruits étant de 20:80 à 80:20.

2. Procédé selon la revendication 1, **caractérisé en ce qu'**à l'étape (a), un mélange qui contient le lait entier et le saccharose en un rapport en poids de 20:80 à 80:20 est utilisé.

3. Procédé selon au moins l'une quelconque des revendications 1 et/ou 2, **caractérisé en ce qu'**à l'étape (a), un mélange qui comprend une masse sèche de 25 à 40 % en poids est utilisé.

4. Procédé selon au moins l'une quelconque des revendications 1 à 3, **caractérisé en ce que** le premier traitement thermique à l'étape (b) est réalisé en deux étapes, tout d'abord à une température dans la plage allant de 100 à 150 °C, puis avec application d'un gradient de température de 100 à 50 °C.

5. Procédé selon au moins l'une quelconque des revendications 1 à 4, **caractérisé en ce qu'**à l'étape (b), un concentré ayant une masse sèche de 65 à 90 % en poids est préparé.

6. Procédé selon au moins l'une quelconque des revendications 1 à 5, **caractérisé en ce que** la caramélisation à l'étape (c) est réalisée à une température dans la plage allant de 85 à 95 °C.

7. Procédé selon au moins l'une quelconque des revendications 1 à 6, **caractérisé en ce que** le premier et le deuxième refroidissement (étapes d et f) sont réalisés à des températures dans la plage allant de 30 à 40 °C, et respectivement de 20 à 25 °C.

8. Procédé selon au moins l'une quelconque des revendications 1 à 7, **caractérisé en ce que** le séchage sur bande sous vide est réalisé à des températures dans les zones de chauffage dans la plage allant de 60 à 130 °C et des pressions de 15 à 40 mbar.
